(19) Europäisches Patentamt
European Patent Office
Office européen des brevets

(11) **EP 3 498 105 A1**

(12) **EUROPEAN PATENT APPLICATION**
published in accordance with Art. 153(4) EPC

(43) Date of publication:
**19.06.2019 Bulletin 2019/25**

(51) Int Cl.:
*A23K 50/40* (2016.01)     *A23K 40/25* (2016.01)

(21) Application number: **17855835.9**

(86) International application number:
**PCT/JP2017/033745**

(22) Date of filing: **19.09.2017**

(87) International publication number:
**WO 2018/061880 (05.04.2018 Gazette 2018/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.09.2016 JP 2016190996**

(71) Applicant: Unicharm Corporation
**Ehime 799-0111 (JP)**

(72) Inventors:
• YOKOMORI, Minoru
  Itami-shi
  Hyogo 664-0831 (JP)
• SAKODA, Junya
  Itami-shi
  Hyogo 664-0831 (JP)
• UCHII, Sayaka
  Itami-shi
  Hyogo 664-0831 (JP)

(74) Representative: Dolleymores
**9 Rickmansworth Road**
**Watford, Hertfordshire WD18 0JU (GB)**

(54) **PET FOOD GRAINS, METHOD FOR MANUFACTURING SAME, DEVICE FOR MANUFACTURING SAME, AND PET FOOD**

(57)     Provided are pet food grains for reducing regurgitation after a meal, containing: puffed grains having a moisture content of 3% to 12% by mass, in which a proportion of grains, each of which has a surface with an arithmetic average surface roughness Sa of 14 μm or greater which is measured using an L-filter having a nesting index of 0.25 mm, is 60% or greater, and a proportion of grains whose hardness immediately after being immersed in dilute hydrochloric acid (pH of 2.5) at 25°C for 10 minutes is 2.5 kgw or less is 60% or greater.

FIG. 2

EP 3 498 105 A1

## Description

Technical Field

The present invention relates to pet food grains, a method of producing the pet food grains, a device for producing the pet food grains, and pet food containing the pet food grains.

Priority is claimed on Japanese Patent Application No. 2016-190996, filed on September 29, 2016, the content of which is incorporated herein by reference.

Background Art

For example, it is common to see a cat swallowing the body hair during grooming and vomiting the hairball accumulated in the body. However, apart from vomiting the hairball, a cat regurgitates pet food within approximately one hour after a meal in some cases.

Due to the fact that the vomit is transparent or light yellow (the bile has not been sufficiently mixed with the eaten pet food), it is considered that such regurgitation after a meal is caused because the pet food staying in the upper part of the stomach to the duodenum in a solid state stimulates the stomach wall or the intestinal wall.

According to the example of PTL 2, it is described that the hardness of grains is likely to be decreased due to water absorption in a case where the grains contain lignocellulose which is crude fiber (insoluble dietary fiber) and thus regurgitation after a meal is suppressed.

PTL 2 describes pet food produced according to a method of puffing a pet food material discharged from an extruder and cutting the puffed pet food material. However, there is no description on suppressing regurgitation after a meal in PTL 2 because the object thereof is to produce grains which can be easily crushed (crisp) at the time of eating.

Citation ListPatent Literature

[PTL 1] Japanese Patent No. 5813688

[PTL 2] Japanese Unexamined Patent Application, First Publication No. 2002-238469

Summary of Invention

Technical Problem

However, the palatability of pet food containing crude fiber (insoluble dietary fiber) as described in PTL 1 is likely to be reduced compared to a case where pet food does not contain crude fiber.

An object of the present invention is to provide pet food grains capable of decreasing regurgitation after a meal without reducing the palatability, a method of producing the pet food grains, a device for producing the pet food grains, and pet food containing the pet food grains.

Solution to Problem

The present invention has the following aspects.

[1] Pet food grains for reducing regurgitation after a meal, containing: puffed grains having a moisture content of 3% to 12% by mass, in which a proportion of grains, each of which has a surface with an arithmetic average surface roughness Sa of 14 μm or greater which is measured using an L-filter having a nesting index of 0.25 mm, is 60% or greater, and a proportion of grains whose hardness immediately after being immersed in dilute hydrochloric acid (pH of 2.5) at 25°C for 10 minutes is 2.5 kgw or less is 60% or greater.

[2] Pet food containing: the pet food grains according to [1]; and other pet food grains which are different from the pet food grains according to [1], in which other pet food grains are formed of grains containing a fiber source and having a moisture content of 3% to 12% by mass, a proportion of grains, each of which has a surface with an arithmetic average surface roughness Sa of 14 μm or greater which is measured using an L-filter having a nesting index of 0.25 mm, is less than 60%, and a proportion of grains whose hardness immediately after being immersed in dilute hydrochloric acid (pH of 2.5) at 25°C for 10 minutes is 2.5 kgw or less is 60% or greater.

[3] A method of producing the pet food grains according to [1], including: supplying an ingredient mixture to an extruding machine which heats and kneads the ingredient mixture and discharges a kneaded material; puffing the kneaded material discharged from the extruding machine; and cutting the puffed kneaded material after the puffed kneaded material starts to be contracted.

[4] A device for producing pet food grains, including: an extruding machine which heats and kneads an ingredient mixture and discharges a kneaded material; a die plate which is provided on a discharge port of the extruding machine and discharges the kneaded material in a rod shape; and a cutter which cuts the kneaded material to have a predetermined length in the vicinity of the discharge port of the die plate, in which the die plate includes a first opening portion formed on a side of the extruding machine, a second opening portion formed on a side of the cutter, and a flow path communicating the first opening portion with the second opening portion, an inner diameter of the second opening portion is 3.5 times or greater the minimum inner diameter of the flow path, and the kneaded material discharged from the extruding machine is puffed in the die plate and then cut by the cutter after the kneaded material starts to be contracted.

Advantageous Effects of Invention

According to the present invention, it is possible to obtain pet food grains capable of decreasing regurgitation after a meal without reducing the palatability and pet food containing the pet food grains.

Brief Description of Drawings

FIG. 1 is a cross-sectional view illustrating an example of a device for producing pet food grains of the present invention.
FIG. 2 is a cross-sectional view for describing a method of producing the pet food grains using the device of FIG. 1.
FIG. 3 is a cross-sectional view for describing a device and a method of producing other pet food grains.

Description of Embodiments

In the present specification, the term "pets" indicates animals that have been bred by people. In a narrower sense, pets are animals being cared for by their owners. Further, the term "pet food" indicates feed for pets. The pet food of the present invention can be sold as "animal feed" or "animal food".

In the present specification, the pet food grains indicate an aggregate of grains used as a part or all of pet food. In the present specification, grains constituting the pet food grains are also referred to as "food grains".

[Method of measuring moisture content]

In the present specification, the moisture content value is a value obtained by a normal pressure heating and drying method.

Specifically, an object to be measured is pulverized using a pulverizer so as to pass through a sieve having an opening diameter of 1 mm and then used as a sample. 2 to 5 g of the analytical sample is accurately weighed, put into an aluminum weighing dish (after the sample is dried in advance, the weight thereof is accurately weighed), dried at a temperature of $135 \pm 2°C$ for 2 hours, and stands to be naturally cooled in a desiccator. Next, the weight thereof is accurately weighed, and then the moisture content is acquired from a difference between the weights of the sample weighed before and after the drying.

Specifically, an object to be measured is pulverized using a pulverizer so as to pass through a sieve having an opening diameter of 1 mm and then used as a sample. The mass (W1 gram) of an aluminum weighing can is measured in advance as a constant weight value. The sample is put into the aluminum weighing can and the mass (W2 gram) is weighed. Next, the sample is dried under conditions of 135°C for 2 hours using a forced circulation type hot air drier. The sample stands and cools in a dry atmosphere (in a silica gel desiccator) and the mass thereof (W3 gram) is weighed. The moisture content is acquired from the obtained respective mass values using the following equation.

$$\text{Moisture content (unit: \% by mass)} = (W2 - W3) \div (W2 - W1) \times 100$$

The moisture content is set to a value measured immediately after the final product is opened within 30 days from the date of manufacture or a value measured under conditions similar to the conditions described above.

[Method of measuring hardness]

In the present specification, the hardness (breaking hardness) of the food grains constituting pet food grains is a value obtained by the following measuring method.

The breaking stress at the time of compression at a constant compression rate is measured under the following conditions using a compression tester (EZ-TEST, model No.: EZ-500NSX, manufactured by Shimadzu Corporation).
Plunger: cylindrical plunger having diameter of 20 mm
Platform: flat dish
Compression rate: 60 mm/min
Lowest point of plunger: 1.5 mm (gap between flat dish and plunger)
Measurement temperature: 25°C

Specifically, one food grain to be measured is placed on a flat dish and the stress is measured while a plunger is vertically pressed from the top of the food grain at a constant rate. The peak value (maximum value) of the stress is read as the value of the breaking stress.

Further, the numerical value unit of the breaking hardness is converted into newton (N) by multiplying the numerical value of the breaking stress (unit: kgw) measured using the above-described compression tester by 9.8.

[Arithmetic average surface roughness Sa]

In the present specification, the arithmetic average surface roughness Sa is acquired by performing surface observation (magnification of 40 times, observation field area of 19 to 20 mm$^2$) on food grains using a non-contact three-dimensional shape measuring device VR-3200 (manufactured by KEYENCE CORPORATION, using an L-filter having a nesting index of 0.25 mm). In this manner, the arithmetic average roughness Sa of the surfaces of food grains is calculated.

<Pet food grains>

The food grains constituting the pet food grains of the present invention are puffed grains. The "puffed grains" indicate grains obtained by forming an ingredient mixture into a granular shape and also indicate grains obtained by performing a puffing step of foaming inside the ingredient mixture. The "puffing step" indicates a step of generating a gas in the ingredient mixture using a technique of carrying out heating, fermentation, a chemical reaction, or pressure reduction. In the puffing step, as a gas is generated, the volume of the ingredient mixture is increased so as to have porous properties. Further, as the volume of the ingredient mixture is increased, the bulk density thereof is decreased. Before, after, or at the same time with the puffing step, "puffed grains" are obtained by forming the ingredient mixture in a granular shape. The "non-puffed grains" indicate grains produced without performing the puffing step.

The moisture content of the pet food grains according to the present invention is in a range of 3% to 12% by mass, preferably in a range of 5% to 12% by mass, and more preferably in a range of 8% to 10% by mass. In a case where the moisture content thereof is greater than or equal to the lower limit of the above-described range, water absorption properties are sufficiently obtained. Meanwhile, in a case where the moisture content thereof is less than or equal to the upper limit of the above-described range, excellent palatability and the effect of suppressing regurgitation are obtained.

In the entire food grains constituting the pet food grains of the present invention, 60% or more of food grains have a surface with an arithmetic average surface roughness Sa (using an L-filter having a nesting index of 0.25 mm) of 14 μm or greater. The surface roughness of food grains constituting the pet food grains may not be uniform in the entire surface, and at least a part of the surface (measuring region of Sa) may have a Sa of 14 μm or greater.

In a case where food grains have a surface with a Sa of 14 μm or greater, the water absorption properties of food grains are improved, and gastric juices and the like are absorbed inside the body of a pet so that the food grains tend to be softened. The reason for this is considered that the surface area of food grains is increased and thus water absorption easily occurs as the surface roughness of the food grains is increased. In a case where the proportion of food grains having a large surface roughness is 60% or greater, the water absorption properties of the pet food grains are sufficiently improved so that the effect of suppressing regurgitation after a meal is sufficiently obtained.

The content of food grains having a surface with a Sa of 14 μm or greater is preferably 65% by mass or greater and more preferably 70% by mass or greater with respect to the content of the pet food grains.

The upper limit of Sa is not particularly limited. However, in a case where the food grains are coated with fats and oils, the coating is unlikely to be uniformly performed in a case where Sa is extremely large. For example, Sa is preferably 30 μm or less and more preferably 25 μm or less.

In the entire food grains constituting the pet food grains of the present invention, 60% or more of food grains have a hardness of 2.5 kgw or less immediately after being immersed in dilute hydrochloric acid (pH of 2.5) at 25°C for 10 minutes. In the present specification, the expression "immediately after being immersed" indicates 1 minute after the pet food is taken out from the dilute hydrochloric acid.

The dilute hydrochloric acid is dilute hydrochloric acid obtained by adding several drops of 1 N (newton) of hydrochloric acid dropwise to distilled water and adjusting the pH thereof to 2.5 (25°C).

The hardness of food grains immersed in the dilute hydrochloric acid for 10 minutes is considered to correspond to the hardness of the eaten food grains in the stomach. In a case where the hardness thereof is 2.5 kgw or less, physical stimulation to the stomach wall is reduced so that regurgitation after a meal can be suppressed. In addition, the lower limit of the hardness is 0.0 kgw (measuring precision or less).

In a case where the proportion of food grains which become softened in dilute hydrochloric acid is 60% or greater, the effect of suppressing regurgitation of pet food grains after a meal is sufficiently obtained.

The content of food grains having a hardness of 2.5 kgw or less is preferably 65% by mass or greater, more preferably 70% by mass or greater, still more preferably 80% by mass or greater, and particularly preferably 90% by mass or greater with respect to the content of pet food grains.

Further, in the entire food grains constituting the pet food grains of the present invention, it is preferable that 40% or more of food grains have a hardness of 1.3 kgw or less immediately after being immersed in dilute hydrochloric acid (pH of 2.5) at 25°C for 10 minutes. The lower limit of the hardness is 0.0 kgw (measuring precision or less).

In a case where the proportion of food grains which become sufficiently softened in dilute hydrochloric acid is 40% or greater, unevenness in water absorption properties of the entire pet food grains is likely to be decreased. Further, the effect of suppressing regurgitation is improved by further increasing the proportion of food grains which become softened.

The content of food grains having a hardness of 1.3 kgw or less is preferably 40% by mass or greater, more preferably 50% by mass or greater, still more preferably 60% by mass or greater, and particularly preferably 70% by mass or greater with respect to the content of pet food grains.

[Ingredients]

The ingredients of the pet food grains according to the present invention are not limited as long as the above-described physical properties are satisfied. In the production of pet food, known ingredients can be used.

Examples of the powder ingredients include cereals (such as corn, wheat, rice, barley, oat, and rye), beans (such as whole soybeans), starch (wheat starch, corn starch, rice starch, potato starch, tapioca starch, sweet potato starch, and sago starch), vegetable proteins (such as corn gluten meals, defatted soybeans, and soybean protein), meat (such as chicken meat, beef, pork, and venison, and meals (such as chicken meal, pork meal, beef meal, and mixed mill of these)), seafood (such as fish meat and meals (fish meal)), vegetables, and powdery additives (such as vitamins, minerals, amino acids, flavoring ingredients, fibers, colorants, and palatability improvers).

The meals indicate powder obtained by compressing meat or seafood and finely grinding the compressed meat or seafood.

Examples of the palatability improvers include animal ingredient extracts, vegetable ingredient extracts, yeast extracts (brewer's yeast extracts, baker's yeast extracts, and torula yeast extracts), and dried matter of yeast (brewer's yeast, baker's yeast, and torula yeast).

As liquid ingredients to be added to powder ingredients, as necessary, liquid ingredients such as fats and oils, liquid sugar, palatability improver solutions, flavoring agents, and coloring agents can be used. Further, after the puffed grains are dried, the puffed grains may be coated with liquid ingredients (coating agents) containing fats and oils, seasonings, palatability improvers, and flavoring agents.

The fats and oils may be vegetable fats and oils or animal fats and oils (chicken oil, lard, beef tallow (fat), milk fats and oils, and the like). The coating agent contains preferably animal fats and oils and particularly preferably beef tallow.

The formulation of ingredients is not particularly limited. It is preferable that the formulation is set such that the nutritional composition of food grains to be obtained is satisfied and excellent formability is obtained.

(Formulation example of pet food grains for cats): The pet food grains contain 55% to 75% by mass of cereals, 10% to 25% by mass of meat, 5% to 15% by mass of seafood, 2% to 5% by mass of vitamins and minerals, and 2% to 20% by mass of fats and oils, and the remainders are other components. The total content is 100% by mass.

(Formulation example of pet food grains for dogs): The pet food grains contain 65% to 85% by mass of cereals, 7% to 20% by mass of meat, 5% to 15% by mass of seafood, 2% to 5% by mass of vitamins and minerals, and 2% to 20% by mass of fats and oils, and the remainders are other components. The total content is 100% by mass.

Further, the pet food grains may contain fiber sources (lignocellulose, purified cellulose, and the like) and humectants (glycerin, sorbitol, and the like) as water-absorbing agents that contribute to water absorption of food grains. The water-absorbing agents may be used alone or in combination of two or more kinds thereof.

In a case where pet food grains for cats or dogs contain water-absorbing agents, the amount of the water-absorbing agents to be added is preferably in a range of 0.5 to 15 parts by mass with respect to 100 parts by mass which is the total amount of cereals, meat, seafood, and vitamins and minerals.

From the viewpoint of the palatability, it is preferable that the content of the fiber source is small. The content of the fiber source is preferably in a range of 0 to 9 parts by mass and more preferably in a range of 0 to 3 parts by mass with respect to 100 parts by mass which is the total amount of cereals, meat, seafood, and vitamins and minerals.

Particularly in a case where the pet food grains contain lignocellulose as the fiber source, the content thereof is greater than 0% and less than 6% by mass, preferably 3% by mass or less, and more preferably 1% by mass or less with respect to the content of the pet food grains.

[Shape and size]

The shape of food grains constituting the pet food grains according to the present invention is not particularly limited as long as the shape is suitable for a pet to eat the pet food.

For example, any kind of shape such as a spherical shape, a polygonal shape, a columnar shape, a donut shape, a plate shape, a circular tablet shape, or a clover shape can be employed.

Further, in regard to the size of food grains, the food grains may be small such that pets can fit all of it in their mouth or may be large such that pets can bite into the food plural times.

For example, a pelletized (granular or lumpy) grain whose short diameter and long diameter thereof, in a case where the food grain is placed on a horizontal stand is viewed from the above, are in a range of 3 to 25 mm and whose thickness from the lower surface (lower end) to the upper surface (upper end) thereof on the horizontal stand is in a range of 2.5 to 20 mm is preferable; a pelletized grain whose short diameter and long diameter are in a range of 3 to 11 mm and whose thickness is in a range of 2.5 to 9 mm is more preferable; and a pelletized grain whose short diameter and long diameter are in a range of 5 to 9 mm and whose thickness is in a range of 2.5 to 8 mm is still more preferable. In a case where the food grains have such a shape, the hardness of food grains whose moisture content is adjusted to a predetermined value is easily adjusted to be in a preferable range in the heat treatment and the drying treatment during the step of producing pet food grains.

<Method of producing pet food grains>

The method of producing the pet food grains according to the present invention is not particularly limited as long as the method can be used for producing food grains satisfying the above-described physical properties.

Puffed grains can be suitably produced using an extruder (extruding machine). For example, a method of producing pet food grains using the following producing device is preferable.

[Producing device]

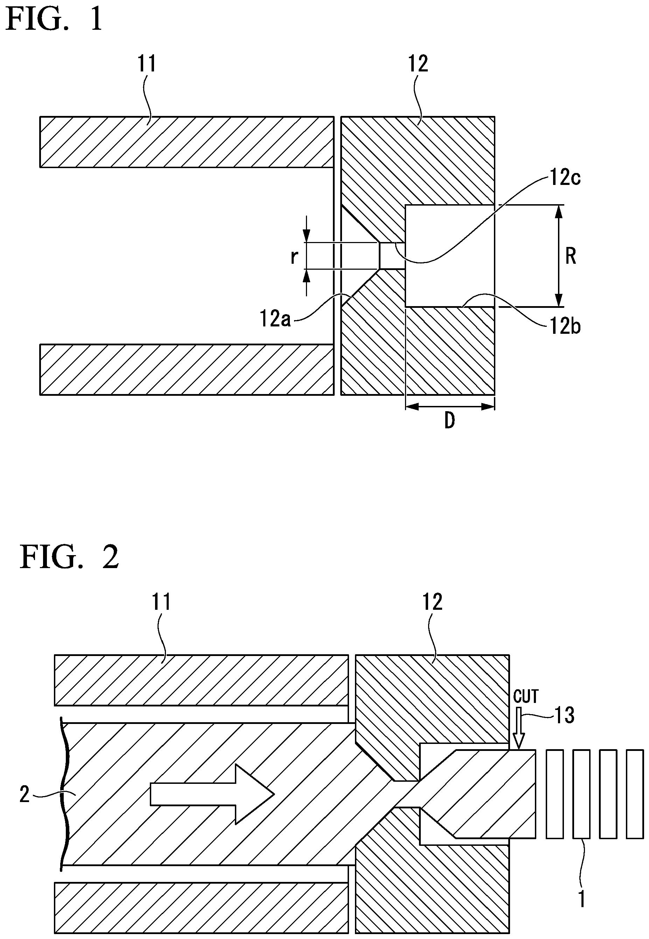

FIGS. 1 and 2 are views illustrating a device suitable for producing the pet food grains of the present invention and both are cross-sectional views schematically illustrating main portions of the device. FIG. 2 is a cross-sectional view for describing a method of producing the pet food grains using the device illustrated in FIG. 1.

In the figure, the reference numeral 1 represents food grains, the reference numeral 2 represents a kneaded material, and the reference numeral 11 represents an extruder. An extruder 11 heats and kneads an ingredient mixture and discharges a kneaded material 2. A die plate 12 which discharges the kneaded material 2 in a rod shape is provided on a discharge port of the extruder 11.

Although not illustrated, a cutter which cuts the kneaded material 2 to have a predetermined length is provided in the vicinity of the discharge port of the die plate 12. The reference numeral 13 in FIG. 2 represents a cutting position cut by the cutter. For example, a rotary blade is used as the cutter.

The die plate 12 includes a first opening portion 12a formed on a side of the extruder 11 and a second opening portion 12b provided on a side of the cutter. In the flow path communicating the first opening portion 12a with the second opening portion 12b, the diameter of the first opening portion 12a gradually decreases in a direction toward the second opening portion 12b, and the first opening portion 12a is connected to the second opening portion 12b through a minimum inner diameter portion 12c. The second opening portion 12b has a constant inner diameter. The minimum inner diameter of the flow path is set as r, and the inner diameter of the second opening portion 12b is set as R.

As illustrated in FIG. 2, the kneaded material 2 which has been under high-temperature and high-pressure conditions in the extruder 11 passes through the flow path in the die plate 12 from the first opening portion 12a of the die plate 12, is pushed out in a normal pressure atmosphere from the minimum inner diameter portion 12c, and is puffed in the second opening portion 12b. Further, the kneaded material 2 is sufficiently puffed while advancing toward the outlet (the discharge port of the die plate 12) of the second opening portion 12b, discharged from the discharge port of the die plate 12 after starting to be contracted in the second opening portion 12b, and cut by the cutter (the cutting position 13) so that the food grains 1 are formed (granulated).

Since air cells are formed inside the kneaded material 2 at the time of being puffed and the kneaded material 2 is cut by the cutter after the puffing is completely finished and the kneaded material starts to be contracted, the cut surface has pores formed by cutting air cells.

The shape of the food grains 1 formed in the above-described manner is a columnar shape obtained by cutting the rod-like kneaded material 2 with a surface perpendicular to the length direction. The cut surface perpendicular to the length direction (the upper surface or lower surface of the food grain having a columnar shape in the length direction) has a larger arithmetic average surface roughness Sa than that of a side surface parallel to the length direction.

For example, in a case where the food grains 1 are viewed in a direction perpendicular to the length direction, it is preferable that the short diameter and the long diameter thereof are in a range of 3 to 25 mm and the thickness from the lower surface (the lower end in the thickness direction) to the upper surface (the upper end in the thickness direction) of the food grain placed on a horizontal stand is in a range of 2.5 to 20 mm, more preferable that the short diameter and the long diameter thereof are in a range of 3 to 11 mm and the thickness thereof is in a range of 2.5 to 9 mm, and still more preferable that the short diameter and the long diameter thereof are in a range of 5 to 9 mm and the thickness thereof is in a range of 2.5 to 8 mm.

In the die plate 12, the inner diameter R of the second opening portion 12b is 3.5 times or greater (R/r $\geq$ 3.5) the minimum inner diameter r of the flow path in the die plate 12. From the viewpoint of formability of the food grains, the upper limit of R/r showing the ratio between the inner diameters is preferably 4 or less and more preferably 3.6 or less.

In a case where the ratio of R/r is 3.5 or greater, since the kneaded material 2 can be sufficiently puffed, the size of air cells to be formed inside the kneaded material is increased and thus the size of pores to be formed in a cut surface is increased. In other words, since the surface roughness of the cut surface of the food grain 1 is increased, food grains each having a surface with a Sa of 14 $\mu$m or greater are obtained.

The size of the minimum inner diameter r is designed depending on the size of food grains expected to be obtained.

The shape of the outlet of the minimum inner diameter portion 12c is designed depending on the size of food grains expected to be obtained.

A distance D from a point where the kneaded material 2 is out of the minimum inner diameter portion 12c to a point where the kneaded material 2 is out of the second opening portion 12b is set as a length required for the kneaded material 2 to be contracted after the kneaded material 2 advancing inside the second opening portion 12b is sufficiently puffed.

For example, it is preferable that the minimum inner diameter r of the flow path is in a range of 3 to 10 mm, the inner diameter R of the second opening portion 12b is in a range of 9 to 40 mm, and the distance D thereof is in a range of 10 to 20 mm. It is more preferable that the minimum inner diameter r thereof is in a range of 4 to 6 mm, the inner diameter R thereof is in a range of 12 to 24 mm, and the distance D thereof is in a range of 15 to 18 mm.

[Method of producing pet food grains]

A preferred aspect of the method of producing the pet food grains using the device illustrated in FIGS. 1 and 2 will be described.

First, a powder material and a liquid material are mixed with each other, hot water and steam are added thereto, and the resulting mixture is subjected to a heat treatment (precooking) at approximately 90°C to 100°C using a preconditioner to obtain an ingredient mixture. The content of moisture in the ingredient mixture is preferably in a range of 10% to 25% by mass.

Next, the ingredient mixture obtained by the precooking is supplied to the extruder 11 of the above-described device.

In the extruder 11, the ingredient mixture is subjected to a heat treatment at approximately 120°C to 135°C while the ingredient mixture is kneaded, and the kneaded material is discharged from the die plate 12 and cut, thereby forming food grains.

The kneaded material discharged from the extruder 11 is sufficiently puffed in the die plate 12, discharged from the die plate 12 after starting to be contracted, and then cut.

Thereafter, a drying treatment is performed to adjust the moisture content to a desired value, thereby obtaining target pet food grains. The food grains may be coated after the drying treatment.

[Drying treatment]

The method of performing a drying treatment on the food grains is not particularly limited, and known methods such as a method of drying food grains by blowing hot air, a method of drying food grains by reducing the pressure, and a method of drying food grains by freeze-drying can be employed. Among these drying methods, from the viewpoint of improving the flavor of the pet food, a method of drying food grains by blowing hot air is preferable.

The temperature of food grains during the drying treatment and the temperature of hot air to be blown to food grains are not particularly limited. For example, the temperature of hot air is preferably 150°C or lower, more preferably in a range of 90°C to 120°C, and still more preferably in a range of 100°C to 110°C. In a case where food grains are dried at this temperature, the time for the heat treatment is preferably in a range of 1 minute to 120 minutes, more preferably in a range of 5 minutes to 60 minutes, and still more preferably in a range of 5 minutes to 15 minutes. The lower limit of the temperature of hot air is not particularly limited. The lower limit thereof is typically a temperature higher than room temperature (20°C) and preferably 30°C or higher.

In a case where the temperature ranges and the time range are higher than or equal to the above-described lower limits, food grains can be dried in a relatively short time. In a case where the temperature ranges are lower than or equal to the above-described upper limits, it is possible to prevent food grains from being extremely heated.

The food grains may be further coated with a coating agent containing crude beef tallow, a seasoning, or a flavoring agent after being dried.

The coating method is not particularly limited, and the food grains can be coated according to a vacuum coating method. The vacuum coating method is a method of reducing the pressure in a state in which the heated food grains and the coating agent are in contact with each other or adhere to each other and slowly releasing the food grains to the atmosphere. The coating agent may be in a liquid or powder state. By coating the food grains with the coating agent, the palatability (biting property) for a pet can be improved.

<Pet food>

The pet food grains of the present invention can be provided as they are as pet food.

Alternatively, a mixture containing the pet food grains of the present invention and other pet food grains different from those may be provided as pet food. Other pet food grains will be described below.

Further, the pet food may contain other pieces (dried vegetable pieces, dried meat pieces, dried fish pieces, and the like) other than grains (granulated material).

The pet food is provided in the form of a product obtained by an appropriate amount thereof is accommodated in a container.

[Other pet food grains]

Other pet food grains are formed of grains having a moisture content of 3% to 12% by mass and containing fiber sources, the proportion of grains, each of which has a surface with an arithmetic average surface roughness Sa of 14 μm or greater (using an L-filter having a nesting index of 0.25 mm), is less than 60%, and the proportion of grains whose hardness immediately after being immersed in dilute hydrochloric acid (pH of 2.5) at 25°C for 10 minutes is 2.5 kgw or less is 60% or greater.

The moisture content of other pet food grains and the hardness after immersion in dilute hydrochloric acid and the preferable ranges thereof are the same as those of the pet food grains according to the present invention.

It is preferable that the moisture content of the pet food grains of the present invention which coexist in the pet food is approximately the same as the moisture content of other pet food grains. Specifically, an absolute value of a difference in moisture content between both food grains is preferably in a range of 0% to 5% by mass and more preferably in a range of 0% to 3% by mass.

Other pet food grains are different from the pet food grains of the present invention in terms that the proportion of grains, each of which has a surface with an arithmetic average surface roughness Sa of 14 μm or greater, is less than 60%. Since other pet food grains contain fiber sources, the hardness after immersion in dilute hydrochloric acid is decreased.

As the fiber sources, those exemplified as the water-absorbing agent are preferable, and the fiber sources may be used alone or in combination of two or more kinds thereof. Among these, from the viewpoint of the palatability, one or both of lignocellulose and purified cellulose are preferable.

The content of the fiber sources in other pet food grains is set such that the hardness after immersion in dilute hydrochloric acid is in a predetermined range. For example, the content of the fiber sources is preferably in a range of 4% to 10% by mass and more preferably in a range of 6% to 8% by mass with respect to the content of other pet food grains.

The examples of ingredients of other pet food grains and the formulation examples thereof are the same as those of the pet food grains according to the present invention except that other pet food grains contain fiber sources as indispensable components.

The examples of the size and shape of other pet food grains are also the same as those of the pet food grains according to the present invention.

Other pet food grains may be puffed grains or non-puffed grains, but puffed grains are preferable from the viewpoint that the hardness after immersion in dilute hydrochloric acid is likely to be decreased.

The method of producing other pet food grains is not particularly limited as long as food grains satisfying the above-described physical properties can be produced using the method.

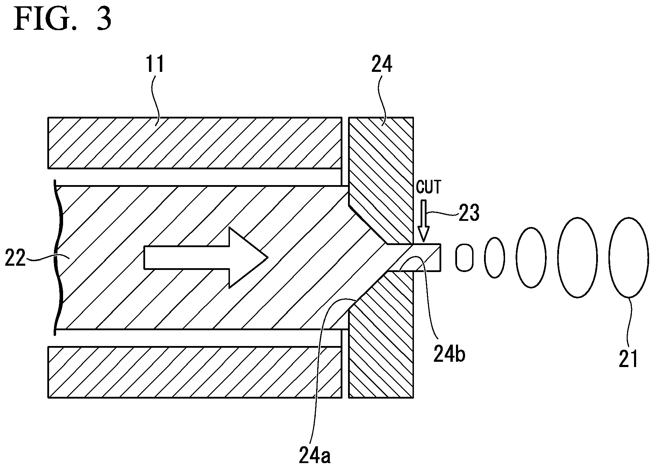

In a case where other pet food grains are puffed grains, the grains can be suitably produced using an extruder (extruding machine). For example, a method of producing pet food grains using a producing device illustrated in FIG. 3 is preferable.

In FIG. 3, the reference numeral 21 represents food grains constituting other pet food grains, the reference numeral 22 represents a kneaded material, the reference numeral 11 represents an extruder, and the reference numeral 24 represents a die plate provided on a discharge port of the extruder.

The device of FIG. 3 is largely different from the device illustrated in FIG. 2 in terms that an opening portion (a discharge port of the die plate 24) on a side of a cutter becomes an outlet of a minimum inner diameter portion 24b in the die plate 24 provided on the discharge port of the extruder 11 and the second opening portion 12b in FIGS. 1 and 2 is not provided.

Although not illustrated, a cutter which cuts the kneaded material 22 to have a predetermined length is provided in the vicinity of the outlet of the minimum inner diameter portion 24b. The reference numeral 23 in FIG. 3 represents a cutting position cut by the cutter.

For example, a rotary blade is used as the cutter.

The method of producing pet food grains can be performed similarly to the production method using the device illustrated in FIGS. 1 and 2 until the ingredient mixture is supplied to the extruder 11.

According to the production method using the device illustrated in FIG. 3, the kneaded material 22 which has been under high-temperature and high-pressure conditions in the extruder 11 is pushed out in a normal pressure atmosphere from the minimum inner diameter portion 24b in the die plate 24, and cut by a cutter (cutting position 23) immediately after being pushed out, thereby forming food grains 21. The food grains 21 are puffed after being cut so that rounded puffed grains are obtained. Thereafter, a drying treatment is performed to adjust the moisture content to a desired value, thereby obtaining target pet food grains. The food grains may be coated after the drying treatment.

Since the walls of air cells in the vicinity of the surface of the food grain 21 are likely to be broken at the time of the food grain 21 being puffed after being cut, large air cells are unlikely to be formed and thus pores derived from small air cells are formed in the surface thereof. Further, since the food grains 21 are contracted after being puffed, the pores formed in the surface are also contracted to be formed into micropores. Therefore, the arithmetic average surface roughness Sa of the surfaces of the food grains 21 is decreased.

In the pet food containing the pet food grains of the present invention and other pet food grains, the mass ratio between the pet food grains of the present invention and other pet food grains is preferably in a range of 100:0 to 5:95, more preferably in a range of 75:25 to 5:95, and still more preferably in a range of 50:50 to 5:95.

The total amount of the pet food grains of the present invention and other pet food grains is preferably in a range of 95% to 100% by mass, more preferably in a range of 98% to 100% by mass, and still more preferably 100% by mass with respect to the amount of the entire pet food.

According to the pet food grains of the present invention, a decrease in hardness caused by water absorption can be increased by setting the arithmetic average surface roughness Sa of puffed grains to be large. As the result, regurgitation after a meal can be suppressed. Therefore, regurgitation after a meal can be reduced without changing the formulation of the pet food grains. In other words, regurgitation after a meal can be reduced without degrading the palatability.

Even in a case where the pet food grains of the present invention do not contain fiber sources or the content of fiber sources in the pet food grains is small, regurgitation after a meal can be reduced. Accordingly, the pet food grains of the present invention have excellent palatability compared to other pet food grains containing fiber sources.

On the contrary, other pet food grains containing fiber sources are superior to the pet food grains of the present invention in terms of contribution to the effect of suppressing regurgitation of the hairball.

Therefore, in a case where the pet food grains of the present invention are mixed with other pet food grains to constitute pet food, pet food that reduces regurgitation after a meal and has excellent palatability and the effect of suppressing regurgitation of the hair ball is obtained.

In order to inform pet owners that the pet food grains or the pet food of the present invention is suitable for reducing regurgitation after a meal, a product can be sold by displaying a message that the pet food is suitable for reducing regurgitation (also referred to as vomiting or emesis) after a meal on the package or the like of the product.

The pet food grains of the present invention is effective for reducing regurgitation caused by the eaten food grains staying in the upper part of the stomach to the duodenum in a solid state. Specifically, the pet food grains are effective for reducing regurgitation occurring within one hour after eating the pet food.

Particularly cats tend to regurgitate within one hour after eating pet food on a daily basis. Therefore, the pet food grains or pet food of the present invention is preferably used particularly for cats.

[Examples]

Hereinafter, the present invention will be described in more detail based on the following examples, but the present invention is not limited to these examples.

[Examples 1 and 2]

Pet food grains were produced using the device illustrated in FIGS. 1 and 2.

The minimum inner diameter r of the flow path in the die plate 12 was set to 5 mm, the inner diameter R of the second opening portion was set to 18 mm, and the distance D was set to 18 mm. The ratio of R/r was 3.6. Both of the outlet of the minimum inner diameter portion 12c and the outlet of the second opening portion 12b were set to have a circular shape.

First, cereals, meat, seafood, vitamins and minerals, fats and oils, brewer's yeast, and vegetables were mixed based on the formulation listed in Table 1, warm water and steam were added thereto, and the resulting mixture was subjected to a heat treatment at 90°C to 100°C for 3 minutes using a preconditioner, thereby obtaining an ingredient mixture (moisture content of 20% to 26% by mass).

Next, the obtained ingredient mixture was supplied to an extruder, a heat treatment was performed at 120°C to 135°C for 30 seconds while kneading the ingredient mixture, the kneaded material were discharged from the die plate, and the kneaded material was cut, thereby obtaining cylindrical food grains having a diameter of 9 mm and a thickness of 3.5 mm.

Thereafter, the obtained food grains were dried at approximately 100°C to 110°C for approximately 15 minutes using a dryer, and the moisture content thereof was adjusted to 8% by mass.

After the food grains were dried, the food grains were coated with fats and oils for coating according to a vacuum coating method, thereby obtaining pet food grains.

The arithmetic average surface roughness Sa was measured by arbitrarily taking ten food grains from the obtained pet food grains. Among these ten grains, the proportion of the number of grains having a surface with a Sa of 14 $\mu$m or greater was calculated. The results are listed in Table 2.

Apart from this, the hardness immediately after immersion in dilute hydrochloric acid (pH of 2.5) at 25°C for 10 minutes was measured by arbitrarily taking ten food grains from the obtained pet food grains. Among these ten grains, the proportion of the number of grains having a surface with a hardness of 2.5 kgw or less and the proportion of the number of grains with a hardness of 1.3 kgw or less were respectively calculated. The results are listed in Table 2.

[Comparative Examples 1 to 4]

Four kinds of commercially available dry pet food grains for cats were used in Comparative Examples 1 to 4. It was confirmed that all of these food grains had a moisture content of 5% to 10% by mass.

The arithmetic average surface roughness Sa and the hardness immediately after immersion in dilute hydrochloric acid of arbitrarily selected ten grains were respectively measured in the same manner as in Example 1, and the proportions of the numbers of grains listed in Table 2 were acquired. The results are listed in Table 2.

[Table 1]

| | | Example 1 | Example 2 |
|---|---|---|---|
| Formulation [% by mass] | Cereals | 57.2 | 55.2 |
| | Meat | 17.2 | 17.2 |
| | Seafood | 8.6 | 8.6 |
| | Vitamins and minerals | 2.9 | 2.9 |
| | Fats and oils | 0 | 2 |
| | Brewer's yeast | 0.6 | 0.6 |
| | Vegetables (beet pulp) | 1.5 | 1.5 |
| | Fats and oils for coating | 12 | 12 |
| | Total amount | 100 | 100 |

[Table 2]

| | | Example 1 | Example 2 | Comparative Example 1 | Comparative Example 2 | Comparative Example 3 |
|---|---|---|---|---|---|---|
| Arithmetic average surface roughness Sa | Measured value for ten grains [μm] | 15.4868 | 19.3945 | 14.0788 | 6.963 | 9.732 |
| | | 20.202 | 19.5886 | 16.1063 | 9.425 | 8.9911 |
| | | 20.418 | 19.5595 | 9.4879 | 8.539 | 9.3593 |
| | | 20.8372 | 19.5886 | 10.1963 | 9.6752 | 10.177 |
| | | 14.5863 | 15.8296 | 13.8629 | 9.5623 | 9.2553 |
| | | 17.2719 | 12.1099 | 9.5046 | 8.5879 | 9.9448 |
| | | 13.7536 | 13.8487 | 10.5584 | 9.0375 | 11.1116 |
| | | 18.0323 | 8.7595 | 11.9314 | 7.6837 | 8.5222 |
| | | 16.6107 | 17.8262 | 9.455 | 8.0966 | 9.1234 |
| | | 13.5968 | 15.0784 | 9.7954 | 8.9254 | 10.0133 |
| | Proportion of number of grains with Sa of 14 μm or greater | 80 | 70 | 20 | 0 | 0 |
| Hardness after immersion in dilute hydrochloric acid | Measured value for ten grains [kgw] | 12.9143 | 0.05147 | 2.74867 | 7.46745 | 2.0708 |
| | | 0.12407 | 0.19306 | 1.91396 | 5.5827 | 7.55254 |
| | | 0.04638 | 0.56582 | 18.2006 | 5.18879 | 14.4079 |
| | | 0.84661 | 0.07909 | 14.6988 | 5.35631 | 12.4566 |
| | | 0.07476 | 0.24352 | 10.1659 | 5.15527 | 7.19163 |
| | | 0.38996 | 0.16483 | 10.4663 | 7.01671 | 8.88339 |
| | | 0.55578 | 6.41928 | 2.32899 | 8.77382 | 5.15817 |
| | | 0.05396 | 3.88745 | 8.56879 | 8.89983 | 8.52716 |
| | | 0.09876 | 5.64894 | 3.74842 | 5.82539 | 8.51964 |
| | | 0.86432 | 0.20335 | 3.32267 | 8.36733 | 2.26022 |
| | Proportion of number of grains with hardness of 2.5 kgw or less [%] | 90 | 70 | 20 | 0 | 20 |
| | Proportion of number of grains with hardness of 1.3 kgw or less [%] | 90 | 70 | 0 | 0 | 0 |

As shown in the results listed in Tables 1 and 2, in Examples 1 and 2, the proportion of grains, each of which had a surface with an arithmetic average surface roughness Sa of 14 μm or greater, was 60% or greater, and the proportion of grains whose hardness immediately after immersion in dilute hydrochloric acid (pH of 2.5) at 25°C for 10 minutes was 2.5 kgw or less was 60% or greater. Therefore, eaten food grains tend to be softened in the stomach and regurgitation after a meal can be reduced.

On the contrary, in the commercially available products of Comparative Examples 1 to 4, the proportion of grains, each of which had a surface with an arithmetic average surface roughness Sa of 14 μm or greater, was 20% or less and the grains did not become sufficiently softened at the time of being immersed in dilute hydrochloric acid.

Reference Signs List

1, 21: food grain (pet food grain)
2, 22: kneaded material
11: extruder (extruding machine)
12, 24: die plate
12a, 24a: first opening portion
12b: second opening portion
12c, 24b: minimum inner diameter portion
13, 23: cutting position

**Claims**

1. Pet food grains for reducing regurgitation after a meal, comprising:

   puffed grains having a moisture content of 3% to 12% by mass,
   wherein a proportion of grains, each of which has a surface with an arithmetic average surface roughness Sa of 14 $\mu$m or greater which is measured using an L-filter having a nesting index of 0.25 mm, is 60% or greater, and
   a proportion of grains whose hardness immediately after being immersed in dilute hydrochloric acid (pH of 2.5) at 25°C for 10 minutes is 2.5 kgw or less is 60% or greater.

2. Pet food comprising:

   the pet food grains according to claim 1; and
   other pet food grains which are different from the pet food grains according to claim 1,
   wherein the other pet food grains are formed of grains containing a fiber source and having a moisture content of 3% to 12% by mass,
   a proportion of grains, each of which has a surface with an arithmetic average surface roughness Sa of 14 $\mu$m or greater which is measured using an L-filter having a nesting index of 0.25 mm, is less than 60%, and
   a proportion of grains whose hardness immediately after being immersed in dilute hydrochloric acid (pH of 2.5) at 25°C for 10 minutes is 2.5 kgw or less is 60% or greater.

3. A method of producing the pet food grains according to claim 1, comprising:

   supplying an ingredient mixture to an extruding machine which heats and kneads the ingredient mixture and discharges a kneaded material;
   puffing the kneaded material discharged from the extruding machine; and
   cutting the puffed kneaded material after the puffed kneaded material starts to be contracted.

4. A device for producing pet food grains, comprising:

   an extruding machine which heats and kneads an ingredient mixture and discharges a kneaded material;
   a die plate which is provided on a discharge port of the extruding machine and discharges the kneaded material in a rod shape; and
   a cutter which cuts the kneaded material to have a predetermined length in the vicinity of the discharge port of the die plate,
   wherein the die plate includes a first opening portion formed on a side of the extruding machine, a second opening portion formed on a side of the cutter, and a flow path communicating the first opening portion with the second opening portion,
   an inner diameter of the second opening portion is 3.5 times or greater the minimum inner diameter of the flow path, and
   the kneaded material discharged from the extruding machine is puffed in the die plate and then cut by the cutter after the kneaded material starts to be contracted.

## FIG. 1

## FIG. 2

## FIG. 3

**INTERNATIONAL SEARCH REPORT**

| International application No. |
| --- |
| PCT/JP2017/033745 |

| A. CLASSIFICATION OF SUBJECT MATTER |
| --- |
| Int.Cl. A23K50/40(2016.01)i, A23K40/25(2016.01)i |
| According to International Patent Classification (IPC) or to both national classification and IPC |

| B. FIELDS SEARCHED |
| --- |

| Minimum documentation searched (classification system followed by classification symbols) |
| --- |
| Int.Cl. A23K50/40, A23K40/25 |

| Documentation searched other than minimum documentation to the extent that such documents are included in the fields searched |
| --- |
| Published examined utility model applications of Japan 1922-1996 |
| Published unexamined utility model applications of Japan 1971-2017 |
| Registered utility model specifications of Japan 1996-2017 |
| Published registered utility model applications of Japan 1994-2017 |

| Electronic data base consulted during the international search (name of data base and, where practicable, search terms used) |
| --- |

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 5943368 B1 (UNI CHARM CORPORATION) 05 July 2016, entire text, all drawings<br>& WO 2017/056275 A1 | 1-4 |
| A | JP 2015-533279 A (MARS INCORPORATED) 24 November 2015, entire text, all drawings<br>& US 2015/0296837 A1 & WO 2014/066438 A1 & CA 2889018 A1 & CN 104955342 A | 1-4 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 November 2017 | 12 December 2017 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2017/033745

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2014-79238 A (UNI CHARM CORPORATION) 08 May 2014, entire text, all drawings<br>& US 2014/0093621 A1 & CN 103704493 A & CA 2828113 A1 | 1-4 |
| A | JP 2-124064 A (IIJIMA, Masahiko) 11 May 1990, entire text, all drawings (Family: none) | 4 |
| A | JP 2009-268415 A (TOMINAGA JUSHI KOGYOSHO KK) 19 November 2009, entire text, all drawings<br>& US 2009/0280216 A1 & EP 2116135 A1 | 4 |

Form PCT/ISA/210 (continuation of second sheet) (January 2015)

**EP 3 498 105 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016190996 A
- JP 5813688 B
- JP 2002238469 A